# FASCICULE DE BREVET EUROPEEN

(11) **EP 3 870 802 B1**
(45) Date de publication et mention de la délivrance du brevet: **11.03.2026**
(21) Numéro de dépôt: 19779031.4
(22) Date de dépôt: 03.10.2019
(51) Int. Cl.: E21B 41/00, E21B 43/12, E21B 43/16

(54) **PROCEDE ET SYSTEME D'INJECTION DE GAZ EN SOUS-SOL**
VERFAHREN UND SYSTEM ZUR UNTERIRDISCHEN GASINJEKTION
METHOD AND SYSTEM FOR UNDERGROUND GAS INJECTION

(30) Priorité: 22.10.2018 FR 1871245
(43) Date de publication de la demande: 01.09.2021
(73) Titulaire: IFP Energies nouvelles, 92852 Rueil-Malmaison (FR); Storengy SAS, 92270 Bois Colombes (FR); Graziella Green Power, 52100 Arezzo (IT)
(72) Inventeur: PERREAUX, Marc Paul, 78620 L'Étang-la-Ville (FR); GAINVILLE, Martin, 92852 Rueil-Malmaison cedex (FR); JEANNIN, Laurent, 78640 Saint-Germain-de-la-Grange (FR)
(74) Mandataire: IFP Energies nouvelles
(86) Numéro de dépôt international: PCT/EP2019/076799
(87) Numéro de publication internationale: WO 2020/083623

(56) Documents cités:
- JP-A- 2008 307 483
- RU-C1- 2 512 156
- US-A- 3 194 175
- US-A1- 2012 186 662
- US-A1- 2017 145 800

## Description

### Domaine technique

La présente invention concerne le domaine de l'injection de gaz dans une formation souterraine. L'injection de gaz dans le sous-sol est une opération largement répandue dans l'industrie pétrolière, notamment dans le cadre des techniques d'EOR (Enhanced Oil Recovery) grâce à l'injection de gaz naturel ou de CO₂ dans les réservoirs pétroliers afin d'améliorer la récupération de pétrole. Il y a actuellement de nombreux projets de réinjection de CO₂ pour de l'EOR à travers le monde. L'injection alternée d'eau et de gaz est également mise en place pour l'EOR (Water Alternating Gas (WAG) Injection).

L'injection de CO₂ en milieu souterrain est également utilisée pour les projets de séquestration du CO₂ dans le sous-sol pour limiter l'effet de serre et réduire son impact sur le changement climatique. Il y a actuellement quatre projets industriels de CCS (Carbon Capture and Sequestration) en opération dans le monde permettant de stocker 5 millions de tonnes de CO₂ par an.

Le gaz peut être injecté seul avec une pression en tête de puits correspondant à un gradient de pression de gaz sur toute la profondeur du puits. Cette solution nécessite des moyens de compression de gaz important, entraînant une consommation d'énergie et un coût d'investissement élevés.

### Technique antérieure

Des technologies d'injection simultanée de gaz et de liquide dans le même puits, basées sur la dissolution complète du gaz dans le liquide dans le puits, l'injection de gaz étant réalisée par une canne d'injection centrale, sont connues par exemple par la solution Carbfix (projet de recherche collaboratif), testée et approuvée sur le site de Hellisheidi en Islande, ou de la demande de brevet US 4 632 601 A. Pour pouvoir dissoudre totalement le gaz dans le liquide, un faible ratio de volume de gaz sur volume de liquide est nécessaire. De fait, ces technologies limitent le débit d'injection de gaz dans le puits.

D'autres dispositifs permettant la réinjection simultanée d'un gaz et d'un liquide, de manière diphasique, ont été proposés. Magma Energy Italia, GeothermEx et Schlumberger Software et la demande de brevet JP 2012 207 605 A proposent une canne d'injection centrée dans le puits. L'utilisation de cette canne de faible diamètre entraîne l'impossibilité d'intervention au « câble lisse », ce type d'intervention permet des opérations de maintenance (par exemple, démontage de valves, mise en place de bouchons, mesures de pression et/ou température). La demande de brevet JPH 09 177 507 A utilise un dispositif spécifique pour mélanger le liquide et le gaz dans le puits. Ces technologies d'injection simultanée diphasique n'utilisent qu'un seul point d'injection, complexifiant l'opération de démarrage de l'écoulement diphasique et/ou limitant l'écoulement diphasique sur une faible longueur du puits.

La demande de brevet US 5 022 787 A propose de mélanger les gaz et l'eau directement en tête de puits : l'injection de gaz ne peut donc pas se faire dans une colonne d'eau stabilisée. Cette solution ne permet ni un mélange aisé de ces deux fluides, ni l'assurance d'écoulement diphasique dans le puits, l'amorçage de l'écoulement pouvant être difficile dans le cas de réservoirs à faible pression et forte injectivité.

On connait également les demandes de brevet US 2017/145 800 A1, JP 2008 307 483 A et RU 2 512 156 C1 qui concernent des méthodes d'injection d'un gaz et d'un liquide dans un puits et US3 194 175 A qui concerne une valve.

Parmi ces systèmes, certains nécessitent des pressions de gaz élevées en tête de puits, entraînant un coût des installations élevé.

Par ailleurs, un inconvénient de ces systèmes concerne la consommation d'énergie potentiellement importante, et ce particulièrement au démarrage du système.

De plus, ces systèmes manquent de flexibilité, vis-à-vis de la variabilité des conditions opératoires et des conditions réelles d'injections dans le site.

Pour remédier à ces inconvénients, la présente invention concerne un procédé et un dispositif d'injection d'un gaz dans une formation souterraine au moyen d'un puits, qui comprend au moins deux cylindres coaxiaux délimitant un volume central et un volume annulaire et une sortie de mélange liquide/gaz. La tête de puits, situé en partie haute, au-dessus du niveau du sol, comprend une entrée de liquide et une entrée de gaz. Les cylindres coaxiaux servent à la circulation de liquide et de gaz, chacun depuis une entrée distincte, vers une sortie commune de mélange liquide/gaz situé en pied du puits. Plusieurs orifices de communication (points d'injection) entre les cylindres coaxiaux équipés ou non de moyens d'ouverture/fermeture permettent l'injection d'un des fluides provenant d'un des deux volumes dans l'autre des deux volumes, afin de créer une zone de mélange. Le procédé comprend les étapes suivantes :
a) D'injection de liquide depuis l'entrée de liquide et de gaz depuis l'entrée de gaz séparément, l'un dans le volume central et l'autre dans le volume annulaire,
b) De mélange de liquide et de gaz. Pour se faire, l'un de ces deux fluides traverse radialement le cylindre central pour rejoindre le fluide se trouvant de l'autre côté du cylindre central. Selon l'invention, le cylindre central s'étend sensiblement sur toute la longueur du puits. Le mélange se fait par les points d'injection répartis longitudinalement sur le cylindre qui peuvent être ouverts ou fermés.
c) De sortie du mélange liquide/gaz ainsi obtenu au niveau de la sortie de mélange gaz/liquide pour le transférer dans la formation souterraine.

Ce procédé permet une grande modularité et l'optimisation des conditions d'injection. Notamment, la pression d'injection de gaz en tête de puits peut être réduite, permettant ainsi une réduction de la consommation énergétique de compression au niveau des unités de surface. La modularité du procédé repose sur la possibilité de modifier le ou les altitudes d'injection pour adapter l'altitude (ou aux altitudes) d'injection au contexte (conditions de puits, injectivité, pression, débits etc...). Le procédé selon l'invention permet aussi de sécuriser l'écoulement diphasique formé au sein du puits et d'assurer la recompression du mélange.

L'invention concerne également un système permettant la mise en œuvre du procédé disposant des caractéristiques évoquées précédemment. La réduction de la pression nécessaire au gaz en tête de puits engendre une réduction du coût des installations de compression de gaz et une diminution de la consommation énergétique.

### Résumé de l'invention

L'invention concerne un procédé d'injection d'un gaz dans une formation souterraine au moyen d'un puits, le puits comprenant deux cylindres coaxiaux délimitant un volume central et un volume annulaire. Ledit puits comprend une tête de puits. Ladite tête de puits comprend une entrée de liquide et une entrée de gaz, et ledit puits comprend aussi une sortie de mélange gaz/liquide. Ledit gaz circule de ladite entrée de gaz vers ladite sortie de mélange liquide/gaz et ledit liquide circule de ladite entrée de liquide vers ladite sortie de mélange liquide/gaz. Ledit procédé comprend les étapes suivantes :
a) On injecte ledit liquide depuis ladite entrée de liquide et ledit gaz depuis ladite entrée de gaz séparément, l'un dans ledit volume central et l'autre dans ledit volume annulaire,
b) On mélange ledit liquide et ledit gaz en faisant traverser ledit cylindre central radialement par l'un de ces deux fluides en ouvrant ou fermant au moins un point d'injection parmi au moins deux points d'injection, lesdits au moins deux points d'injection étant répartis le long dudit cylindre central, le cylindre central s'étendant sensiblement sur toute la longueur du puits et,
c) On fait ressortir un mélange liquide/gaz ainsi obtenu au niveau de ladite sortie de mélange gaz/liquide pour le transférer dans ladite formation souterraine.

Avantageusement, lors de l'étape b), les ouvertures ou fermetures desdits au moins deux points d'injection suivent une séquence d'ouvertures/fermetures.

Préférentiellement, ladite séquence d'ouvertures/fermetures comporte l'ouverture d'un point d'injection lorsque la pression du fluide traversant ledit cylindre central est supérieure à la pression de l'autre fluide, au niveau dudit point d'injection, et lorsque la pression dudit liquide est supérieure à un seuil de pression prédéterminé, au niveau dudit point d'injection.

De manière préférée, ledit seuil de pression prédéterminé est différent pour chacun des points d'injection.

Selon un mode de réalisation du procédé selon l'invention :
a) On injecte séparément ledit liquide dans ledit volume central et ledit gaz dans ledit volume annulaire,
b) On mélange ledit liquide et ledit gaz en faisant traverser radialement ledit cylindre central par ledit gaz dudit volume annulaire vers ledit volume central par l'ouverture d'au moins un point d'injection parmi au moins deux points d'injection répartis le long dudit cylindre central,
c) On fait ressortir ledit mélange liquide/gaz ainsi obtenu au niveau de ladite sortie de mélange gaz/liquide, ladite sortie de mélange liquide/gaz étant située au pied dudit volume central.

Selon un autre mode de réalisation du procédé selon l'invention :
a) On injecte séparément ledit liquide dans ledit volume central et ledit gaz dans ledit volume annulaire,
b) On mélange ledit liquide et ledit gaz en faisant traverser radialement ledit cylindre central par ledit liquide dudit volume central vers ledit volume annulaire par l'ouverture d'au moins un point d'injection parmi au moins deux points d'injection répartis le long dudit cylindre central,
c) On fait ressortir ledit mélange liquide/gaz ainsi obtenu au niveau de ladite sortie de mélange gaz/liquide, ladite sortie de mélange liquide/gaz étant située au pied dudit volume annulaire.

Selon un autre mode de réalisation du procédé selon l'invention :
a) On injecte séparément ledit liquide dans ledit volume annulaire et ledit gaz dans ledit volume central,
b) On mélange ledit liquide et ledit gaz en faisant traverser radialement ledit cylindre central par ledit liquide dudit volume annulaire vers ledit volume central par l'ouverture d'au moins un point d'injection parmi au moins deux points d'injection répartis le long dudit cylindre central
c) On fait ressortir ledit mélange liquide/gaz ainsi obtenu au niveau de ladite sortie de mélange gaz/liquide, ladite sortie de mélange liquide/gaz étant située au pied dudit volume central.

Selon un autre mode de réalisation du procédé selon l'invention :
a) On injecte séparément ledit liquide dans ledit volume annulaire et ledit gaz dans ledit volume central,
b) On mélange ledit liquide et ledit gaz en faisant traverser radialement ledit cylindre central par ledit gaz dudit volume central vers ledit volume annulaire par l'ouverture d'au moins un point d'injection parmi au moins deux points d'injection répartis le long dudit cylindre central,
c) On fait ressortir ledit mélange liquide/gaz ainsi obtenu au niveau de ladite sortie de mélange gaz/liquide, ladite sortie de mélange liquide/gaz étant située au pied dudit volume annulaire.

De manière avantageuse, on mélange le liquide et le gaz par lesdits au moins deux points d'injection régulièrement répartis sur ledit cylindre central, le long du puits.

Préférentiellement, la séquence d'ouvertures/fermetures comprend les ouvertures successives des points d'injections en partant du point d'injection le plus bas du puits vers le point d'injection le plus haut du puits.

Selon une variante du procédé selon l'invention, la séquence d'ouvertures/fermetures comprend les fermetures successives des points d'injections en partant du point d'injection le plus bas du puits vers le point d'injection le plus haut du puits.

Selon un mode de réalisation du procédé selon l'invention, lors de l'étape dudit mélange dudit liquide et dudit gaz, on augmente progressivement le débit d'injection dudit fluide traversant radialement ledit cylindre central.

Selon une variante du procédé selon l'invention, lors de l'étape dudit mélange dudit liquide et dudit gaz, on contrôle la pression d'injection dudit fluide traversant radialement ledit cylindre central.

De manière avantageuse, les vitesses superficielles de déplacement des fluides sont supérieures à 1m/s.

L'invention concerne aussi un système d'injection de gaz dans une formation souterraine pour la mise en œuvre du procédé selon l'une des caractéristiques précédentes, comprenant un puits. Ledit puits comprend deux cylindres coaxiaux délimitant un volume central et un volume annulaire, et une tête de puits. Ladite tête de puits comprend une entrée de gaz et une entrée de liquide et ledit puits comprend une sortie de mélange gaz/liquide. Ledit système comprend un moyen de circulation dudit gaz de ladite entrée de gaz vers ladite sortie de mélange liquide/gaz, et un deuxième moyen de circulation dudit liquide de ladite entrée de liquide vers ladite sortie de mélange liquide/gaz. De plus, ledit système comporte un moyen d'injection de liquide dans ladite tête de puits pour injecter ledit liquide dans un des deux volumes et un moyen d'injection de gaz, dans la tête de puits pour injecter ledit gaz dans l'autre volume. Ledit système comporte également au moins deux moyens de passage radial d'un des fluides à travers ledit cylindre central, ledit cylindre central s'étendant sensiblement sur toute la longueur dudit puits, lesdits au moins deux moyens de passage radial étant répartis le long dudit puits, ces moyens de passage radial comportant des moyens d'ouverture et de fermeture, par exemple des clapets ou des valves.

Selon l'invention, ledit moyen de passage radial comprend au moins une valve et un clapet de non-retour, ladite valve comprenant un système d'ouverture de la valve lorsque la pression dudit liquide, au niveau de ladite valve, dépasse un seuil de pression prédéfini, ledit clapet de non-retour comportant un moyen d'ouverture de clapet lorsque la pression du fluide traversant ledit cylindre central dépasse la pression de l'autre fluide, au niveau dudit clapet de non-retour.

Selon une variante du système selon l'invention, ledit système comporte un moyen d'obturation au pied du volume où aucun mélange liquide/gaz ne se forme. De préférence, ledit moyen d'obturation est un élément annulaire lorsque le volume où se forme ledit mélange liquide/gaz est ledit volume central ou ledit moyen d'obturation est un élément cylindrique lorsque le volume où se forme ledit mélange liquide/gaz est ledit volume annulaire.

Selon un mode de réalisation du système selon l'invention, ledit système comporte un moyen de restriction, ledit moyen de restriction étant positionné au-dessus dudit moyen de passage radial, dans le volume où se forme ledit mélange liquide/gaz.

Selon l'invention, lesdits au moins deux moyens de passage radial sont régulièrement répartis le long dudit puits.

Avantageusement, ladite valve est tarée par une charge en gaz égal audit seuil de pression prédéterminé.

L'invention concerne également l'utilisation du procédé ou du système selon l'une des revendications précédentes pour une application de géothermie ou de stockage de CO2.

### Liste des figures

D'autres caractéristiques et avantages du procédé et du système selon l'invention, apparaîtront à la lecture de la description ci-après d'exemples non limitatifs de réalisations, en se référant aux figures annexées et décrites ci-après.
[Fig 1] illustre un mode de réalisation du système selon l'invention.
[Fig 2] illustre la réduction de la pression d'injection de gaz en tête de puits grâce au système/procédé selon l'invention.
[Fig 3a] illustre un autre mode de réalisation du système selon l'invention.
[Fig 3b] illustre un mode de réalisation d'un moyen de passage radial du système selon l'invention.
[Fig 4] représente le synoptique d'un mode de réalisation du procédé selon l'invention.
[Fig 5a] représente un graphique d'évolution de pressions, en fonction de la profondeur selon un mode de réalisation du procédé, selon une première étape.
[Fig 5b] représente un graphique d'évolution de pressions, en fonction de la profondeur selon un mode de réalisation du procédé selon une autre étape.
[Fig 5c] représente un graphique d'évolution de pressions, en fonction de la profondeur selon un mode de réalisation du procédé selon une autre étape.
[Fig 5d] représente un graphique d'évolution de pressions, en fonction de la profondeur selon un mode de réalisation du procédé, selon une autre étape.
[Fig 6] illustre les évolutions de pression pour un procédé selon l'art antérieur et pour un procédé selon l'invention.

### Description des modes de réalisation

L'invention concerne un procédé d'injection d'un gaz dans une formation souterraine au moyen d'un puits. Le puits comprend deux cylindres coaxiaux délimitant un volume central et un volume annulaire. Ces deux volumes sont ainsi séparés l'un de l'autre par la paroi que constitue le cylindre central. Le cylindre externe, de plus grand diamètre, peut par exemple correspondre au « casing » du puits ; le cylindre interne, de plus petit diamètre, peut par exemple correspondre au « tubing » du puits et s'étend sensiblement sur toute la longueur du puits. Le « casing » est l'enveloppe cylindrique mise en place juste après l'opération de forage pour sécuriser le puits ainsi constitué. Il est généralement construit à partir d'une cimentation. Plusieurs casings s'emboîtent successivement pour la construction d'un puits. Le « tubing » est généralement un tube métallique introduit dans le puits. Il sert à la complétion du puits. Par complétion, on entend l'équipement de finition de puits permettant son fonctionnement (production et/ou injection de fluides) en toute sécurité. Le tubing est d'un diamètre permettant l'utilisation d'un câble lisse (« slickline ») permettant des interventions de maintenance (par exemple, démontage de valves, mise en place de bouchons, mesures de pression et/ou température) dans le tubing, à distance depuis la tête de puits, en faisant passer à l'intérieur du tubing les outils nécessaires aux interventions. Le diamètre interne minimal pour le tubing est alors d'environ 45 mm pour permettre le passage du câble lisse. Les outils sont alors guidés par le câble lisse par l'intermédiaire d'un treuil, d'où l'appellation « intervention au câble lisse ».

En partie haute du puits, le puits comprend une tête de puits qui s'érige au-dessus du sol. De plus, le puits comprend une sortie dans la formation souterraine. La tête de puits comprend au moins une entrée de liquide et au moins une entrée de gaz permettant aux fluides de circuler chacun depuis des entrées distinctes vers une sortie commune de mélange gaz/liquide, positionnée en partie basse du puits pour introduire le mélange liquide/gaz dans la formation souterraine.

Dans sa partie basse, le puits se trouve dans la formation souterraine. Il peut être constitué d'un prolongement du casing, qui dans cette zone, comprend de multiples orifices radiaux pour laisser le mélange gaz/liquide s'échapper radialement dans la formation souterraine. De plus, le mélange gaz/liquide peut également s'écouler verticalement dans la formation souterraine, le casing pouvant être laissé ouvert à son extrémité longitudinale inférieure, le puits étant qualifié en trou ouvert sur sa partie inférieure.

Selon l'invention, le procédé comprend les étapes suivantes :
a) On injecte le liquide depuis au moins une entrée de liquide et le gaz depuis au moins une entrée de gaz, l'un dans le volume central et l'autre dans le volume annulaire. Ainsi, les injections des deux fluides sont séparées et distinctes dans deux volumes. Ils ne peuvent ainsi pas se mélanger, lors de l'injection.
   On mélange le liquide et le gaz. Pour se faire, plusieurs points d'injection répartis le long dudit cylindre central sont ouverts ou fermés pour faire traverser le cylindre central radialement par l'un de ces deux fluides. Pour permettre l'injection, un point d'injection au moins est en position ouverte au cours de l'opération.
   Par point d'injection, on entend un niveau (au sens altitude) d'injection longitudinalement dans le puits. Ainsi, le point d'injection comprend une unique altitude d'injection, selon l'axe longitudinal du puits. Mais il peut comprendre plusieurs positions radiales d'injection sur cette même altitude, par exemple, le point d'injection peut comprendre 4 positions radiales d'injections à 0°, 90°, 180° et 270° ou légèrement espacées verticalement (de préférence moins de 10 mètres de différence d'altitude entre la position la moins profonde et la plus profonde). Les diamètres des points d'injection peuvent également être modifiés par intervention au câble lisse pour favoriser le mélange liquide/gaz.
   Le statut ouvert/fermé des différents points d'injection peut soit évoluer au cours de l'opération, soit rester dans le même état au cours de l'opération. Ainsi, le système proposé est particulièrement modulaire. On peut notamment faire évoluer la profondeur des injections par des moyens d'ouverture/fermeture des points d'injection en fonction des conditions observées in situ. Cette modularité est rendue possible par la multiplicité des points d'injection répartis sur le puits.
   Les ouvertures/fermetures des points d'injection peuvent être réalisées soit « manuellement » via un équipement relié au câble lisse et la mise en place/retrait d'obturateur, soit à distance par un contrôle commande, par exemple via des commandes électriques automatiques, soit par l'utilisation de vannes spécifiques présentant un seuil de déclenchement et éventuellement avec un clapet anti-retour.
   Une fois que le fluide concerné a traversé la paroi représentée par le cylindre central, qui sert de séparation entre le volume central et le volume annulaire, il rejoint l'autre fluide qui était initialement déjà présent dans ce volume. Par la suite, le fluide traversant le cylindre central est appelé Fluide1 et le fluide non traversant le cylindre central est appelé Fluide2. Le Fluide2 reste ainsi dans le volume dans lequel il a été injecté en tête de puits.
   Une fois que le Fluide1 a traversé le cylindre central, le mélange liquide/gaz est possible. Le Fluide1 change alors de volume de circulation alors que Fluide2 ne circule depuis son entrée vers la sortie dans un seul et même volume.
   L'utilisation de points d'injection multiples apporte une flexibilité pour opérer dans différentes situations et de faciliter des opérations de démarrage. Cela permet aussi de sécuriser l'écoulement diphasique du mélange liquide/gaz où le gaz n'est que peu ou pas dissous dans le liquide.
b) On fait ressortir un mélange liquide/gaz ainsi obtenu au niveau de la sortie de mélange gaz/liquide pour le transférer et l'injecter dans la formation souterraine. Le gaz est alors stocké dans la formation souterraine. Ainsi, on évite de rejeter à l'atmosphère des gaz toxiques et/ou des gaz à effet de serre, tels que CO₂, H₂S ou des gaz naturels.

Généralement, le liquide est de l'eau ou de la saumure. Généralement, le gaz est un gaz non condensable, un gaz toxique ou un gaz à effet de serre, par exemple, CO₂, H₂S, des gaz naturels ou bien encore des mélanges de ces gaz.

De préférence, les ouvertures/fermetures des points d'injection peuvent suivre une séquence d'ouvertures/fermetures. Ainsi, la séquence peut être prédéfinie de manière automatique ou être activée manuellement par un équipement relié au câble lisse.

De manière avantageuse, la séquence d'ouvertures/fermetures peut comporter l'ouverture d'un point d'injection qui se produit lorsque d'une part, la pression du fluide traversant le cylindre central est supérieure à la pression de l'autre fluide, au niveau du point d'injection concerné, et d'autre part, lorsque la pression du liquide est supérieure à un seuil de pression prédéterminé, au niveau du point d'injection concerné.

En effet, lorsque la pression de liquide est supérieure à un certain seuil, on peut s'assurer que le niveau de la colonne de liquide dépasse le point d'injection. L'injection de gaz dans une telle colonne de liquide (par exemple de l'eau) favorise le mélange liquide/gaz et l'obtention d'un écoulement diphasique.

De plus, en assurant une pression du Fluide1 supérieure à la pression du Fluide2, on s'assure que le Fluide2 ne peut effectivement pas changer d'espace de circulation (l'espace de circulation étant le volume central ou le volume annulaire), la différence de pression n'y étant pas favorable.

Selon un mode de réalisation du procédé selon l'invention, le seuil de pression prédéterminé peut être différent pour chacun des points d'injection. La variation de ce paramètre le long du puits peut permettre d'améliorer les performances d'injection de gaz.

Dans un premier mode de réalisation du procédé selon l'invention :
a) On peut injecter séparément le liquide dans le volume central et le gaz dans le volume annulaire,
b) On peut mélanger le liquide et le gaz en faisant traverser radialement le cylindre central par le gaz du volume annulaire vers le volume central par l'ouverture d'au moins un point d'injection parmi les au moins deux points d'injection répartis le long du cylindre central. Le liquide, quant à lui, reste dans le volume central, la sortie de mélange liquide/gaz étant située au pied du volume central.
c) On peut faire ressortir le mélange liquide/gaz ainsi obtenu au niveau de la sortie de mélange gaz/liquide.

Ce mode de réalisation est particulièrement avantageux. En effet, il permet une recompression efficace de la colonne de liquide contenue dans le volume central en injectant le gaz dans la colonne, permettant ainsi de limiter la pression d'injection de gaz en tête de puits.

Par ailleurs, injecter le gaz dans une colonne de liquide stable permet de favoriser le mélange et l'écoulement diphasique.

De plus, cette solution facilite les opérations de démarrage en limitant la pression d'injection de gaz nécessaire en tête de puits, la colonne de liquide disposant d'un gradient de pression hydrostatique plus important que celui du gaz.

Selon un deuxième mode de réalisation du procédé selon l'invention :
a) On peut injecter séparément le liquide dans le volume central et le gaz dans le volume annulaire,
b) On peut mélanger le liquide et le gaz en faisant traverser radialement le cylindre central par le liquide du volume central vers le volume annulaire par au moins deux points d'injection répartis le long du cylindre central, la sortie de mélange liquide/gaz étant située au pied du volume central.
c) On peut faire ressortir le mélange liquide/gaz ainsi obtenu au niveau de la sortie de mélange gaz/liquide, la sortie de mélange liquide/gaz étant située au pied du volume annulaire.

Selon un troisième mode de réalisation du procédé selon l'invention :
a) On peut injecter séparément le liquide dans le volume annulaire et le gaz dans le volume central,
b) On peut mélanger le liquide et le gaz en faisant traverser radialement le cylindre central par le liquide du volume annulaire vers le volume central par au moins deux points d'injection répartis le long du cylindre central, la sortie de mélange liquide/gaz étant située au pied du volume central.
c) On peut faire ressortir le mélange liquide/gaz ainsi obtenu au niveau de la sortie de mélange gaz/liquide, la sortie de mélange liquide/gaz étant située au pied du volume central.

Selon un quatrième mode de réalisation du procédé selon l'invention :
a) On peut injecter séparément le liquide dans le volume annulaire et le gaz dans le volume central,
b) On peut mélanger le liquide et le gaz en faisant traverser radialement le cylindre central par le gaz du volume central vers le volume annulaire par au moins deux points d'injection répartis le long du cylindre central, la sortie de mélange liquide/gaz étant située au pied du volume central.
c) On peut faire ressortir le mélange liquide/gaz ainsi obtenu au niveau de la sortie de mélange gaz/liquide, la sortie de mélange liquide/gaz étant située au pied du volume annulaire.

Dans ce cas, après avoir traversé le cylindre central, le gaz est injecté dans la colonne de liquide qui s'est installée dans le volume annulaire. L'injection de gaz à une altitude inférieure à la surface de la colonne d'eau (la surface de la colonne d'eau correspond à l'interface air/eau de la colonne d'eau) favorise le mélange et sécurise l'écoulement diphasique.

De manière avantageuse, on peut mélanger le liquide et le gaz par au moins deux points d'injection régulièrement répartis sur le cylindre central, le long du puits. Par régulièrement répartis, on entend que les points d'injection sont espacés longitudinalement d'au moins plusieurs mètres, de préférence au moins dix mètres, voire d'au moins cent mètres.

De cette manière, les opérations de démarrage d'injection de gaz dans la formation souterraine sont facilitées. En effet, en utilisant un premier point d'injection en partie basse, le mélange liquide/gaz peut s'amorcer dans une colonne de liquide de hauteur relativement faible, ce qui facilite le démarrage notamment lorsque l'injectivité du puits est élevée (l'injectivité est la capacité d'absorption du puits pour recevoir et écouler les fluides dans la formation souterraine). Lorsque le mélange liquide/gaz se crée après le démarrage de l'introduction du gaz dans la colonne de liquide, le mélange liquide/gaz dispose d'un gradient de pression hydrostatique situé entre celui du liquide et celui du gaz. Cela a pour effet une remontée de la surface de la colonne de liquide dans le volume concerné puisque la pression au niveau du point d'injection augmente par l'effet d'allègement de la colonne.

On peut alors injecter le gaz sur un point d'injection situé à un niveau supérieur dans le puits et peu à peu créer un mélange sur une portion importante du puits dans la mesure des conditions d'injectivité en fond de puits.

De plus, utiliser des points d'injection régulièrement répartis sur le cylindre central, le long du puits, peut permettre une flexibilité de l'installation en fonction du gaz, du liquide, des caractéristiques de solubilité de l'un dans l'autre, de l'injectivité du fluide (l'injectivité du puits étant sa capacité à introduire le mélange dans la formation souterraine. Elle dépend à la fois des fluides en jeu et des caractéristiques de porosité/perméation de la formation souterraine).

De manière préférée, la séquence d'ouvertures/fermetures peut comprendre les ouvertures successives des différents points d'injections en partant du point d'injection le plus bas du puits vers le point d'injection le plus haut du puits. Cette caractéristique facilite le démarrage de l'injection de gaz dans la formation souterraine en utilisant, grâce à la présence d'une colonne de liquide et de son gradient de pression hydrostatique favorable, une pression d'injection de gaz réduite en tête de puits. Lors de la remontée de la colonne de liquide alors induite par la formation du mélange liquide/gaz, l'injection de gaz peut alors se faire sur un point d'injection situé à un niveau plus haut dans le puits, sans avoir à augmenter la pression d'injection de gaz.

Avantageusement, la séquence d'ouvertures/fermetures peut comprendre aussi les fermetures successives des points d'injections en partant du point d'injection le plus bas du puits vers le point d'injection le plus haut du puits. En effet, lors de la remontée de la colonne de liquide induite par la formation du mélange liquide/gaz, l'injection de gaz peut alors se faire sur un point d'injection situé à un niveau plus haut dans le puits, sans avoir à augmenter la pression d'injection de gaz. Le point d'injection situé plus bas peut donc se fermer, évitant ainsi d'avoir à utiliser une pression supérieure de gaz pour injecter dans la colonne d'une part et évitant également que le mélange liquide/gaz formé ne pénètre dans l'autre volume par l'intermédiaire de ce point d'injection si la pression du mélange liquide/gaz à l'altitude du point d'injection concerné devient supérieur à celle du gaz situé à la même altitude.

Ces fermetures successives peuvent se faire simultanément aux ouvertures successives ou bien avec un léger décalage. Par exemple, les fermetures successives peuvent se faire légèrement après les ouvertures successives : ainsi, sur une courte période, deux points peuvent être ouverts simultanément. Cela permet d'éviter l'arrêt d'injection de gaz qui pourrait être néfaste au maintien de l'écoulement diphasique.

Selon une variante du procédé selon l'invention, lors de l'étape de mélange du liquide et du gaz, on peut augmenter progressivement le débit du gaz. De cette manière, on peut contrôler la formation du mélange et/ou le niveau de la colonne de mélange produit, ainsi que l'introduction, ou non, du Fluide1 dans le Fluide2 par les multiples points d'injection. Cette variante est particulièrement intéressante pour instituer un contrôle passif d'ouvertures/fermetures des différents points d'injection grâce aux pressions relatives et/ou absolues et/ou aux débits engendrés.

Alternativement, lors de l'étape de mélange du liquide et du gaz, on peut contrôler la pression d'injection du gaz. De cette manière, on peut contrôler de manière passive les ouvertures/fermetures des points d'injection grâce aux pressions relatives et/ou absolues.

On peut également contrôler les ouvertures/fermetures des points d'injection via un contrôle commande spécifique, par exemple, par des vannes à ouverture pilotée. Cette particularité permet l'ouverture et/ou la fermeture des points d'injection, sur décision de l'utilisateur. Elle peut s'avérer bénéfique lorsque le comportement du mélange n'est pas celui attendu ou pour des situations de fonctionnement anormales comme les variations d'injectivité de la formation souterraine. Elle permet ainsi plus de flexibilité de fonctionnement à l'installation.

De préférence, les vitesses superficielles de déplacement des fluides sont supérieures à 1 m/s. La vitesse superficielle d'un fluide est définie comme le rapport du débit de la phase de ce fluide, seul, dans la section de passage où cette phase circule. Elle correspond ainsi à la vitesse moyenne de cette phase si elle était la seule phase à circuler dans la section de passage concernée. Ainsi, les conditions de circulation sont favorables à l'entraînement du gaz par la phase liquide et la mise en place d'un écoulement diphasique assurant une bonne recompression.

L'invention concerne aussi un système d'injection de gaz dans une formation souterraine pour la mise en œuvre du procédé selon l'une des caractéristiques précédentes. Ce système comprend notamment un puits comprenant lui-même au moins deux cylindres coaxiaux délimitant un volume central et un volume annulaire. Ces cylindres peuvent notamment être le casing et le tubing du puits réalisés à l'issue de la fin de forage et à la finition du puits. En partie haute, le puits comporte une tête de puits qui s'érige au-dessus du sol. Cette tête de puits comprend notamment une entrée de gaz et une entrée de liquide. Au pied du puits, le puits comprend aussi une sortie de mélange gaz/liquide pour introduire, dans la formation souterraine, le mélange liquide/gaz qui s'est formé dans le puits. Le système comprend un moyen de circulation de gaz pour faire circuler le gaz de l'entrée de gaz vers la sortie de mélange liquide/gaz, un moyen de circulation de liquide pour faire circuler le liquide de l'entrée de liquide vers la sortie de mélange liquide/gaz, un moyen d'injection de liquide dans la tête de puits pour injecter le liquide dans un des deux volumes et un moyen d'injection de gaz, dans la tête de puits pour injecter le gaz dans l'autre volume. Le système comporte au moins deux moyens de passage radial permettant à l'un des fluides de traverser le cylindre central, répartis le long du puits. Les moyens de passage radial permettent les points d'injection d'un des deux fluides dans l'autre fluide. Pour cela, les moyens de passage radial comportent des moyens d'ouverture et de fermeture qui peuvent par exemple être des clapets et/ou des valves d'ouverture/fermeture. Par répartis le long du puits, on entend que les moyens de passage radial sont espacés longitudinalement sur le cylindre central, l'espacement représentant une zone significative du cylindre central. Par exemple, l'espacement longitudinal entre les moyens de passage radial peut être de plusieurs mètres, de préférence au moins dix mètres, et de manière encore plus préférée de plusieurs centaines de mètres.

Au moins deux moyens de passage radial sont utilisés afin d'améliorer la flexibilité d'utilisation et de fonctionnement du puits d'une part et pour faciliter le démarrage de l'installation d'autre part.

Selon l'invention, chaque moyen de passage radial comprend au moins une valve et un clapet de non-retour. La valve peut notamment comprendre un système d'ouverture lorsque la pression du liquide, au niveau de cette valve, dépasse un seuil de pression prédéfini. Ainsi, la valve peut s'ouvrir par exemple uniquement lorsque le niveau de la colonne de liquide au-dessus de la valve est suffisant. De plus, le clapet de non-retour comporte un moyen d'ouverture de clapet lorsque la pression du fluide traversant le cylindre central dépasse la pression de l'autre fluide, au niveau du clapet de non-retour. Le clapet de non-retour empêche notamment le Fluide2 de rejoindre le volume dans lequel le Fluide1 est initialement injecté.

Le clapet de non-retour est en communication avec le volume du Fluide1 d'un côté et avec une chambre intermédiaire, elle-même en communication avec la valve. La valve est en communication avec le volume du Fluide2 d'une part et avec la chambre intermédiaire, en communication avec le clapet de non-retour. La chambre intermédiaire peut contenir le Fluide1 ou le Fluide2.

De manière préférée, la valve est tarée par une charge en gaz dont la pression est égale au seuil de pression prédéterminé. De ce fait, la valve réalise un contrôle passif.

Avantageusement, le système peut comporter un moyen d'obturation au pied du volume où aucun mélange liquide/gaz ne se forme. De préférence, le moyen d'obturation est un élément annulaire lorsque le volume où se forme le mélange liquide/gaz est le volume central. De préférence, le moyen d'obturation est un élément cylindrique lorsque le volume où se forme le mélange liquide/gaz est le volume annulaire.

De cette manière, le moyen d'obturation, par exemple un bouchon, permet d'étancher le bas du volume où aucun mélange ne se forme. Ainsi, le fluide contenu dans ce volume est contraint de traverser le cylindre central par les moyens dédiés à cette fonction. Ainsi, le contrôle des échanges liquide/gaz est amélioré. Les débits de liquide et de gaz sont également mieux contrôlés grâce à la présence du moyen d'obturation. De plus, ce moyen d'obturation permet d'éviter une circulation « en boucle » du gaz : en effet, le gaz non entraîné dans le réservoir pourrait remonter dans le volume où aucun mélange liquide/gaz ne devrait normalement se former et ainsi tourner en boucle entre le point d'injection et la partie basse du puits.

Préférentiellement, le système peut aussi comporter un moyen de restriction positionné au-dessus du moyen de passage radial, dans le volume où se forme le mélange liquide/gaz. Si le volume où se forme le mélange liquide gaz est le volume central, ce moyen de restriction peut être un moyen de restriction du diamètre interne du cylindre central. Si le volume où se forme le mélange liquide/gaz est le volume annulaire, ce moyen de restriction peut être un moyen de restriction comportant une restriction locale du diamètre du cylindre externe et/ou un agrandissement local du diamètre externe du cylindre central. Ce moyen de restriction peut par exemple être une vanne. Ainsi, la section de passage dans le volume considéré, qu'il soit le volume central ou le volume annulaire, est localement réduite. La position de ce moyen de restriction à un niveau longitudinal du puits, situé au-dessus du niveau du moyen de passage radial permet d'éviter, une fois le mélange liquide/gaz produit, que le gaz ne soit tenté de remonter la colonne, par exemple si les vitesses superficielles sont trop faibles (inférieures à 1 m/s), en sens inverse de celui attendu, le sens attendu se dirigeant vers la sortie de mélange liquide/gaz situé en pied de puits, au niveau de la zone où le mélange est introduit dans la formation souterraine.

Selon l'invention, les au moins deux moyens de passage radial sont régulièrement répartis le long du puits. On entend ainsi, que les différents passages radiaux soient espacés longitudinalement, par une longueur sensiblement constante, de préférence une longueur d'au moins dix mètres et de manière encore plus préférée, d'au moins cent mètres. Cette caractéristique permet de faciliter les opérations de démarrage de l'injection de gaz dans la formation souterraine.

Le système et le procédé selon l'invention permettent de réduire la pression d'injection de gaz en tête de puits, permettant de diminuer le coût des moyens de compression associés et la consommation énergétique, ce particulièrement au démarrage.

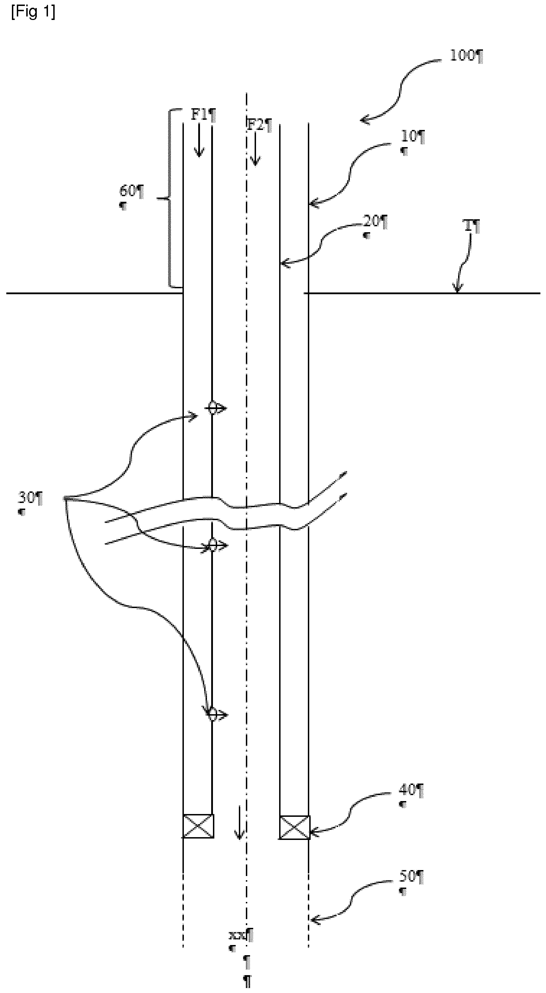

La [Fig 1] illustre, de manière schématique et non limitative, un mode de réalisation du système et du procédé selon l'invention. Le système 100 est constitué d'un puits comprenant au moins un cylindre externe 10 et un cylindre interne, également appelé cylindre central, 20. Ces deux cylindres sont coaxiaux, d'axe xx, correspondant également à l'axe du puits.

Le cylindre externe 10 peut être un casing de puits, c'est-à-dire la partie cimentée du puits juste après le forage pour le sécuriser ; le cylindre interne 20 peut être le tubing de complétion du puits servant à la production ou à l'injection de gaz.

Sur cette figure, la référence T représente le niveau du sol. Ainsi, le puits dispose d'une tête du puits 60 qui est la partie du puits située au-dessus du niveau du sol T.

Un premier fluide F1 est injecté dans la tête de puits par une première entrée. Un deuxième fluide F2 est également injecté dans la tête de puits par une deuxième entrée. L'un de ces deux fluides F1 ou F2 est un gaz, l'autre est un liquide. De préférence, ce liquide est de l'eau ou de la saumure. Le gaz est préférentiellement un gaz toxique ou un gaz à effet de serre, tel que CO₂, H₂S ou des gaz naturels.

Le fluide F1 circule dans l'espace annulaire compris entre le cylindre externe 10 et le cylindre interne 20 alors que le fluide F2 circule dans le cylindre interne 20. Selon une alternative, l'inverse est possible.

En pied de puits, le cylindre externe 10 peut se prolonger par une partie 50 qui dispose de plusieurs orifices radiaux, sur plusieurs niveaux longitudinaux de manière à ce que le mélange liquide/gaz puisse entrer dans la formation souterraine.

En bas du puits, à l'extrémité basse du cylindre interne 20, un moyen d'obturation 40, constitué par exemple d'un bouchon, aussi appelé « packer », est disposé entre le cylindre externe 10 et le cylindre interne 20. Ainsi, le fluide F1 compris dans l'espace annulaire ne peut pas remonter dans le cylindre interne 20. Il est bloqué dans l'espace annulaire délimité par les deux cylindres 10 et 20 et par le moyen d'obturation 40.

Enfin, le cylindre central 20, comporte plusieurs moyens de passage radial 30 répartis sur le cylindre central 20. Ces moyens de passage radial permettent à l'un des deux fluides, par exemple au fluide F1, de traverser radialement le cylindre central 20 et de se retrouver ainsi dans le volume où initialement n'est contenu que le fluide F2. Ainsi, le mélange entre F1 et F2 débute dès l'entrée radiale de F1, dans le volume de F2 (sur la [Fig 1], il s'agit du volume central contenu dans le cylindre central 20). La circulation de F2 se fait selon l'axe longitudinal xx de puits. Ainsi, au début de la phase de mélange, les deux fluides ont des directions de déplacement orthogonales, favorisant le mélange liquide/gaz. Puis, les deux fluides se dirigent vers la sortie située en partie basse du puits. Ainsi, le mélange diphasique a ensuite une direction d'écoulement sensiblement longitudinale.

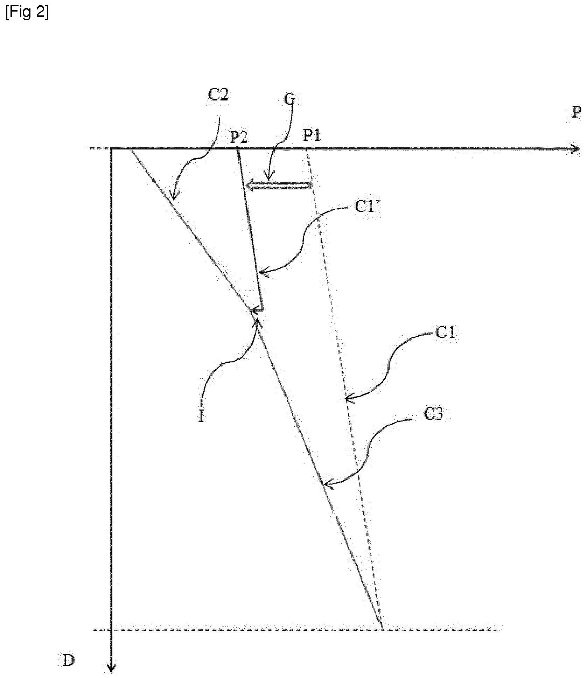

La [Fig 2] illustre, de manière schématique et non limitative, l'impact sur la réduction de pression d'injection de gaz en tête de puits grâce au système et au procédé selon l'invention par rapport au système de l'art antérieur.

La [Fig 2] donne l'évolution de la pression P en abscisse en fonction de la profondeur D, représentée en ordonnée, la direction de l'ordonnée allant vers le fond du puits alors que le niveau 0, correspond, au niveau du sol.

La courbe C1 correspond à l'évolution de la pression de gaz en fonction de la profondeur, dans le cas où on ferait une injection directe selon l'art antérieur. La courbe est définie d'une part par la pression existante dans la formation souterraine et l'injectivité de cette dernière et d'autre part par le gradient hydrostatique du gaz. Ce gradient hydrostatique correspond à la pente de la courbe C1. Pour un gaz, ce gradient est faible, la courbe C1 est proche de la verticale. C'est pourquoi la pression d'injection est élevée en tête de puits.

La pente de la courbe C2 correspond au gradient hydrostatique de la partie liquide. La courbe C2 est beaucoup plus inclinée que la courbe C1 car le gradient hydrostatique du liquide est plus élevé que celui du gaz (du fait de différence des masses volumiques). Ainsi, si on souhaitait injecter un liquide dans le puits, la pression d'injection du liquide en tête serait bien plus faible voire nulle (zone de vide en tête) que la pression d'injection du gaz pour obtenir la même pression en fond de puits.

Dans le cadre du système et du procédé selon l'invention, la [Fig 2] représente schématiquement un point d'injection afin de comprendre le fonctionnement du système et du procédé.

La courbe C2 représente l'injection de liquide depuis la tête de puits jusqu'au point I. Le point I sera détaillé ultérieurement.

La courbe C1' représente l'injection de gaz depuis la tête de puits jusqu'à une altitude de même niveau que le point I (même ordonnée D). La courbe C1' est sensiblement parallèle à la courbe C1 du fait que le gradient hydrostatique est une caractéristique intrinsèque du gaz, aux variations de densité et pertes de charges près, induites par la réduction de pression.

Au niveau de l'altitude du point I, un moyen de passage radial est positionné sur le cylindre central afin de faire traverser l'un des fluides par le cylindre central afin d'être mélangé au deuxième fluide.

Lorsque la pression du gaz à l'altitude du point I du point d'injection dépasse la pression du liquide, correspondant à l'abscisse du point I, à la même altitude du point I, le procédé permet le passage du gaz dans le cylindre central pour venir se mélanger au liquide, ce qui est le cas sur la [Fig 2]. Alternativement, le cheminement inverse du liquide vers le gaz est possible.

Après l'introduction du gaz dans la colonne de liquide, le mélange diphasique liquide/gaz se produit. Le gradient hydrostatique de ce mélange est un intermédiaire entre celui du liquide et celui du gaz. Ainsi, la pente de la courbe C3, correspondant au mélange liquide/gaz se produisant à une altitude inférieure au point d'injection, sous à une altitude en dessous du point I, est un intermédiaire entre la pente de C2 et la pente de C1 ou C1', sous réserves de conditions hydrodynamiques d'entraînement du gaz par le liquide.

On observe ainsi qu'en utilisant un mélange diphasique, la pression de gaz nécessaire à l'injection en tête de puits, P2, est nettement inférieure à la pression de gaz nécessaire en tête de puits, P1, par une injection directe du gaz dans le puits. G correspond à la réduction de cette pression grâce au procédé ou au système selon l'invention.

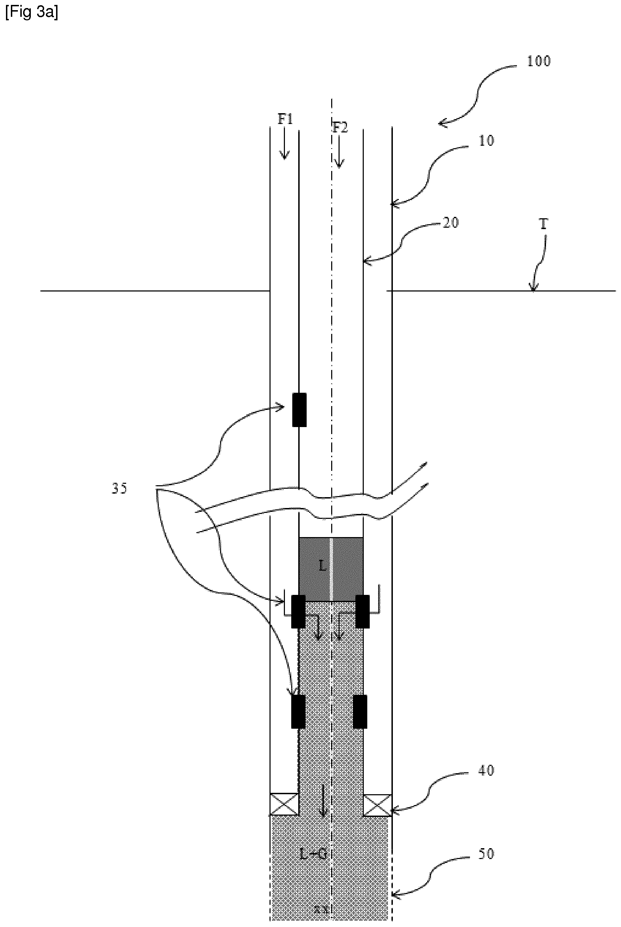

La [Fig 3a] représente un autre mode de réalisation du système et du procédé selon l'invention, de manière schématique et non limitative.

Dans cette figure, les références de même désignation que celles de la [Fig 1] correspondent aux mêmes éléments.

Dans cet exemple de réalisation, le fluide F1 est le gaz et le fluide F2 est le liquide.

Les moyens de passage radial sont ici des assemblages valve/clapet de non-retour 35, qui permettent le passage radial du gaz, à travers le cylindre central 20 pour rejoindre le volume central. Dans cet assemblage valve/clapet de non-retour 35, une valve s'ouvre lorsque la pression de liquide contenu dans le cylindre interne 20, au niveau de la valve, dépasse un seuil de pression prédéfini. Par exemple, ce seuil de pression correspond à un niveau de liquide dans la colonne de liquide qui se crée dans le cylindre interne 20. Ce seuil de pression sert à s'assurer que le niveau de liquide est au-dessus du niveau de l'assemblage valve/clapet de non-retour 35, afin d'assurer une injection de gaz dans une colonne pleine de liquide. Ainsi, le mélange gaz/liquide est amélioré. La valve se ferme (ou se referme) lorsque la pression de liquide, au niveau de la valve, est inférieure au seuil de pression prédéfini.

Une fois la valve de l'assemblage valve/clapet de non-retour 35 ouverte, le clapet de non-retour de l'assemblage valve/clapet de non-retour 35 s'ouvre lorsque la pression de gaz existante dépasse la pression de liquide, au niveau du clapet de non-retour. Ainsi, on assure que l'injection de gaz dans le liquide est possible d'une part, et que l'injection de liquide dans le gaz est rendue difficile. Lorsque la pression de liquide ou du mélange gaz/liquide est supérieure à la pression de gaz, au niveau du clapet de non-retour, le clapet de non-retour se ferme.

De préférence, le clapet de non-retour et la valve de l'assemblage valve/clapet de non-retour 35 sont sensiblement au même niveau dans le puits.

Dans le système 100 de la [Fig 3a], on observe que seul le deuxième assemblage valve/clapet de non-retour 35, en partant du bas du puits, est ouvert. Les autres assemblages valve/clapet de non-retour 35 sont fermés. Ainsi le gaz ne peut passer qu'à travers le deuxième assemblage valve/ clapet de non-retour en partant du bas du puits. Au-dessus du niveau du deuxième assemblage valve/clapet de non-retour 35, il existe une hauteur dans le cylindre interne 20, où la colonne est remplie seulement de liquide L. Puis au-dessous de cette partie pleine de liquide L, la colonne est remplie d'un mélange en écoulement liquide/gaz L+G. La partie au-dessus de la partie liquide est une zone de mélange eau et vapeur à la pression de vapeur de l'eau où l'eau chute dans le cylindre central jusqu'à atteindre la zone de recompression liquide L puis de mélange liquide/gaz L+G.

La [Fig 3a] représente trois assemblages valve/clapet de non-retour 35, correspondant à trois niveaux longitudinalement le long de l'axe xx du puits. Sur les deux niveaux inférieurs, l'assemblage valve/clapet de non-retour 35 est constitué par plusieurs éléments positionnés radialement autour de la section du cylindre interne 20. De préférence, ces éléments sont espacés radialement régulièrement autour du cylindre interne 20. Par exemple, on peut disposer deux éléments espacés de 180° ou quatre éléments espacés tous les 90°. L'espacement radial régulier permet d'améliorer l'injection et le mélange du gaz dans le liquide afin d'obtenir un mélange liquide/gaz L+G le plus homogène possible. On peut également ajouter des équipements internes spécifiques, par exemple un système convergent/divergent du type de ceux de la demande de brevet JP2899604, pour faciliter le mélange liquide/gaz ou gaz/liquide.

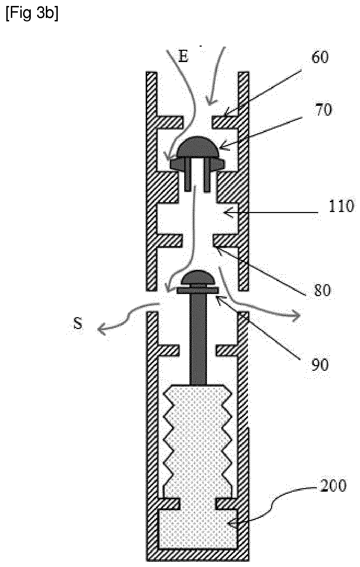

La [Fig 3b] représente, de manière schématique et non limitative, un élément schématique de l'assemblage valve/clapet de non-retour 35. Cet élément comprend un clapet de non-retour 70. Sur la [Fig 3b], le clapet de non-retour est représenté en position ouverte. Lorsqu'il se ferme, lorsque par exemple, la pression du fluide du gaz est inférieure à la pression de liquide, il vient en appui sur le siège de l'orifice 60.

L'élément comporte aussi une valve 90, représentée en position ouverte sur la figure. Lorsqu'elle se ferme, par exemple lorsque la pression de liquide est inférieure à un seuil de pression prédéfini, la valve 90 vient en appui sur le siège de valve 80.

La valve 90 et le clapet de non-retour 70 peuvent être sensiblement coaxiaux. Le gaz qui arrive en E, rencontre d'abord le clapet de non-retour 70, puis, lorsque celui-ci s'ouvre, le gaz passe dans la valve 90 pour ressortir en S et rencontrer le liquide.

La valve 90 est réglée à un seuil de pression prédéfinie par une charge en gaz contenue dans le volume 200. La valve 90 peut être un clapet.

Une chambre intermédiaire 110 peut être à la fois en communication avec le clapet de non-retour 70 et avec la valve 90. Elle peut contenir du Fluide1 ou du Fluide2. Le clapet de non-retour 70 est en communication, de l'autre côté, c'est-à-dire au niveau de l'entrée E, avec le volume qui contient le Fluide1. La valve 90 est en communication avec le volume du Fluide2 au niveau de la sortie S. Juste après la sortie S, le Fluide 1, arrivant de l'entrée E, rentre dans la volume du Fluide2, se mélangeant ainsi à lui.

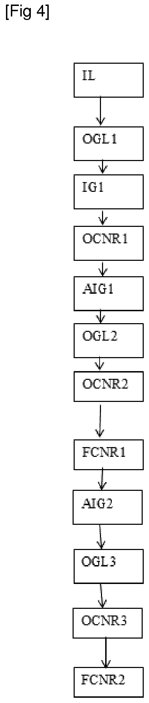

La [Fig 4] représente un synoptique d'un mode de réalisation du procédé selon l'invention, de manière schématique et non limitative.

Sur cette figure, on suppose que le puits dispose de trois assemblages valve/clapet de non-retour, espacés le long de l'axe du puits. Le système utilisé pour ce procédé peut correspondre à celui de la [Fig 3a].

La première étape consiste à débuter l'injection de liquide IL dans le cylindre interne, de manière à créer une colonne de liquide dans ce cylindre. L'injection de liquide se poursuit tout au long du procédé, avec éventuellement des interruptions temporaires.

Lorsque la hauteur de liquide dans le cylindre interne est suffisante, la valve du premier assemblage valve/clapet de non-retour s'ouvre. Il s'agit de l'étape d'ouverture de la valve n°1, en partant du bas du puits, OGL1.

Une fois OGL1 établie, l'injection de gaz IG1 peut débuter avec un certain débit de gaz.

Lorsque la pression de gaz dans l'espace annulaire constitué par l'espace entre les cylindres interne et externe, est supérieure à la pression du liquide contenue dans le cylindre interne, l'ouverture du clapet de non-retour n°1, en partant du bas du puits OCNR1 se crée.

L'injection de gaz dans le liquide (mélange) commence et nécessite une augmentation du débit de gaz AIG1. L'injection de gaz dans le liquide modifie la masse volumique du mélange liquide/gaz. En conséquence, la pression au niveau du point d'injection remonte progressivement au fur et à mesure que le gaz allège la colonne du mélange et ainsi le niveau de la colonne de liquide au-dessus du point d'injection remonte..

Le niveau de la colonne de liquide dans le cylindre interne se poursuit et lorsque la pression de liquide ou de mélange liquide/gaz au niveau de la valve du deuxième assemblage valve/clapet de non-retour en partant du bas du puits dépasse un seuil de pression, pouvant être égal ou différent au seuil de pression prédéfinie de la première valve en partant du bas du puits, l'ouverture de la deuxième valve OGL2 s'opère.

Puis lorsque la pression du gaz au niveau du deuxième clapet de non-retour en partant du bas du puits est supérieure à la pression de liquide (ou de mélange liquide/gaz), l'ouverture du clapet de non-retour OCNR2 se fait et induit la fermeture du premier clapet de non-retour en partant du bas du puits, FCNR1.

Une nouvelle fois, on augmente l'injection de gaz AIG2. La colonne de mélange liquide/gaz, voit encore sa masse volumique diminuer et ainsi le niveau de la colonne de mélange liquide/gaz, dans le cylindre central, remonte.

Lorsque la pression du mélange liquide/gaz ou du liquide atteint le seuil de pression prédéfinie de la valve n°3, c'est-à-dire la valve la plus haute, la valve n°3 s'ouvre. Il s'agit de l'étape OGL3 d'ouverture de la valve n°3.

Lorsque la pression de gaz dépasse la pression à l'intérieur du cylindre interne, au niveau du clapet de non-retour, l'ouverture du clapet de non-retour n°3, c'est-à-dire le clapet de non-retour le plus haut dans le puits, OCNR3 se fait, entraînant la fermeture du clapet de non-retour n°2 FCNR2.

L'injection de gaz dans le puits se poursuit alors en régime établi par le troisième assemblage valve/clapet de non-retour.

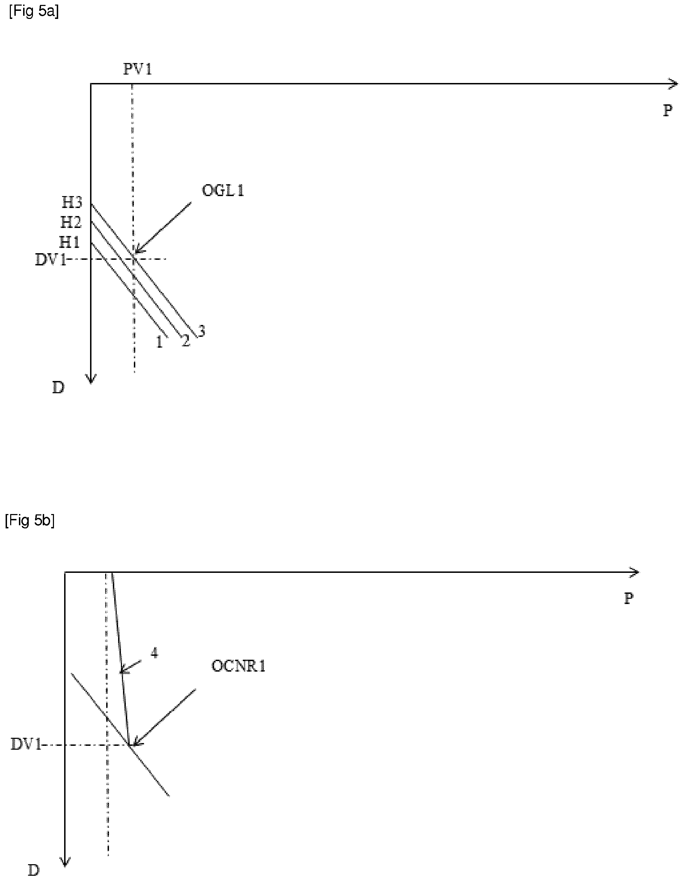

Les figures 5a à 5d montrent l'évolution des pressions P en fonction de la profondeur D du puits lors de la phase de démarrage d'injection de gaz dans la formation souterraine selon un mode de réalisation du procédé selon l'invention, de manière schématique et non limitative. Le procédé d'injection peut être conforme au synoptique de la [Fig 4]. Sur ces figures, les références identiques correspondent aux mêmes informations et ne seront donc pas nécessairement réexpliquées sur chaque figure. De plus, ces figures sont construites de la même manière que la [Fig 2].

La [Fig 5a] correspond à l'injection de liquide seule. Les trois courbes 1, 2 et 3 correspondent à trois instants successifs au cours de l'injection de liquide seul depuis la tête de puits. Ainsi, le niveau de liquide évolue de H1 puis H2 puis H3 en fonction de l'injectivité du puits. On observe que lorsque la colonne atteint le niveau H3, la pression de la courbe n°3, au niveau de la profondeur DV1 correspondant à l'altitude d'implantation du premier assemblage valve/clapet de non-retour dépasse légèrement le seuil de pression prédéfini PV1 de cette première valve. Ainsi, l'ouverture de la valve n°1 OGL1 est établie. L'injection de gaz dans l'espace annulaire peut ainsi commencer.

La [Fig 5b] montre sur la courbe 4 l'injection de gaz. La pente de la courbe 4 est plus droite que celle des courbes 1, 2 et 3 de la [Fig 5a] car le gradient hydrostatique du gaz est nettement plus faible que celui du liquide.

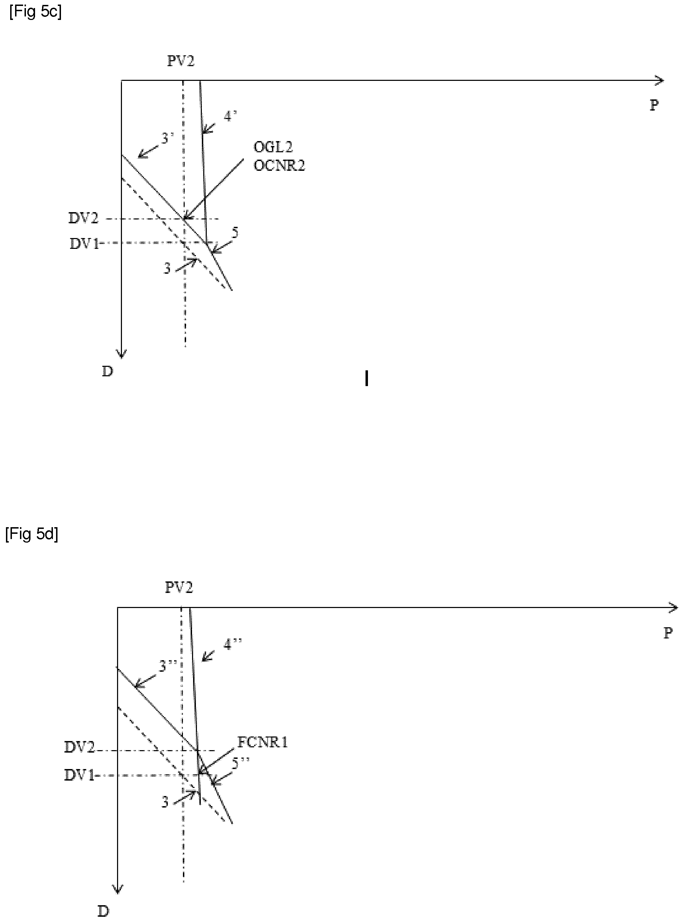

La [Fig 5c] montre l'évolution des courbes après le début de l'injection du gaz dans la colonne de liquide. L'ancienne courbe 3 (en pointillé) est devenue la courbe 5. En effet, lors de l'injection du gaz dans le liquide, la masse volumique du mélange liquide/gaz est comprise entre celle du liquide et celle du gaz. Par conséquent, le gradient hydrostatique du mélange est également compris entre celui du gaz et celui du liquide. Ainsi, la pente de la courbe 5 évolue et l'angle de cette courbe par rapport à l'axe vertical (correspond à l'axe de la profondeur D) se trouve entre l'angle de la courbe 4' et celui de la courbe 3.

La courbe 4' est sensiblement parallèle à la courbe 4 mais la pression au niveau du point d'injection ayant augmenté avec l'allègement de la colonne, la pression de l'annulaire gaz est augmentée afin d'assurer le débit d'injection et ainsi la courbe 4' est translatée vers la droite. Ainsi, la pression d'injection en tête de puits est augmentée en conséquence.

Sur cette figure, on observe une cassure au point DV1. Au-dessous de ce point, la pression suit la courbe 5 et au-dessus, elle suit la courbe 3', parallèle à la courbe 3.
En effet, lors de l'injection de gaz dans le liquide, la colonne s'allège et ainsi, le niveau de la colonne remonte.

Au-dessus de DV1, la colonne est seulement liquide et ainsi la pression suit l'évolution 3' qui a sensiblement le même gradient hydrostatique et donc la même pente que la courbe 3.

Au-dessous de ce point DV1, la colonne est un mélange liquide/gaz dont le gradient hydrostatique est une valeur intermédiaire entre le gradient hydrostatique du liquide et celui du gaz.

On observe que la pression dans la colonne (courbe 3' et 5) est légèrement supérieure au seuil de pression PV2 de la deuxième valve en partant du bas, au niveau de l'altitude DV2 de cette deuxième valve ce qui entraîne l'ouverture de la deuxième valve OGL2.

De plus, la pression d'injection de gaz suivant la courbe 4' dépasse la pression du mélange à l'intérieur du cylindre interne définie par les courbes 3' et 5, au niveau de l'altitude DV2 du clapet et de la valve. Ainsi, l'ouverture du clapet CNR2 se produit. L'injection de gaz peut donc se faire par ce deuxième niveau.

Sur la [Fig 5d], on observe que la pression de gaz, suivant la courbe 4" devient inférieure, à la pression interne du cylindre interne, représentée par les courbes 3" et 5", au niveau de l'altitude DV1 du clapet n°1, ce qui entraîne la fermeture de ce clapet de non-retour.

Les étapes des figures 5a à 5d se reproduisent de manière similaire pour les niveaux supérieurs des assemblages valve/clapet de non-retour. De plus, sur ces exemples, le contrôle d'injection de gaz est gérée par le débit d'injection mais il peut, de manière similaire être gérée par la pression du gaz dans l'annulaire.

Un exemple d'application de géothermie est détaillé ici. Pour cet exemple, on applique le principe du système de la [Fig 3a] avec le liquide, de l'eau, injecté dans le volume central et les gaz sont non condensables, injectés dans le volume annulaire. L'eau provient d'un procédé de récupération d'énergie provenant d'une vapeur souterraine extraite au moyen de puits producteur. L'eau est ensuite réintroduite dans la formation souterraine, ce qui est notamment nécessaire pour une application de géothermie. Les gaz non condensables issus de la formation souterraine et récupérés avec la vapeur, peuvent être des gaz toxiques ou à effet de serre. Pour éviter les émissions polluantes, il est intéressant de les réintroduire dans la formation souterraine.

Le procédé selon l'invention permet de limiter la puissance de réinjection des deux fluides en garantissant l'établissement d'un écoulement gaz liquide étendu et stable et donc augmente la performance du système de géothermie (récupération d'énergie et injection des fluides dans la formation souterraine).

Le procédé et le système selon l'invention peuvent aussi être utilisés, de manière non limitative, pour le stockage de CO2 dans un aquifère ou l'injection simultanée de gaz et d'eau pour le maintien en pression des réservoirs pétroliers (récupération assistée).

### EXEMPLE

Les caractéristiques et avantages du procédé et du système selon l'invention ressortiront de l'exemple ci-dessous.

L'exemple concerne la réinjection combinée de l'eau condensée et des gaz non condensables dont les caractéristiques sont les suivantes :
- Le cylindre externe a un diamètre externe de 168.3 mm et une épaisseur de 7.11 mm, atteignant la couverture du réservoir à -2400 m de profondeur et se prolongeant par une zone en trou ouvert de plusieurs dizaines de mètres.
- Le cylindre interne a un diamètre externe de 114.3 mm et une épaisseur de 6.02 mm.
- Le système dispose d'un moyen d'obturation disposé entre le cylindre interne et le cylindre externe, positionné à -2000 m. Ce moyen d'obturation permet d'isoler l'annulaire du cylindre interne.
- L'injection du gaz de l'annulaire vers l'intérieur du cylindre interne se fait via un orifice à -1300 m.
- Plusieurs orifices peuvent être installés dans la zone -2400 à - 1300 pour assurer le démarrage de l'injection gaz tel que défini dans l'invention.
- Le débit d'injection nominal est de 20 kg/s avec 8 %m de gaz non condensables, ce qui donne un débit normal d'eau de 18.4 kg/s et un débit de gaz non condensables de 1.6 kg/s.
- La pression de la formation souterraine est de 65 bar avec une injectivité de 1 kg/s/bar soit une augmentation de pression fond de puits de 20 bar au débit nominal.
- La température d'injection des deux fluides en tête de puits est de 80 °C.

Le mode de réalisation correspond à celui de la [Fig 3a].

Ces conditions de réinjection de gaz, selon l'invention, sont comparés à un cas de l'art antérieur où le liquide et le gaz, seraient mélangés seulement au fond du puits, juste avant d'être introduits dans la formation souterraine, les autres paramètres sont identiques.

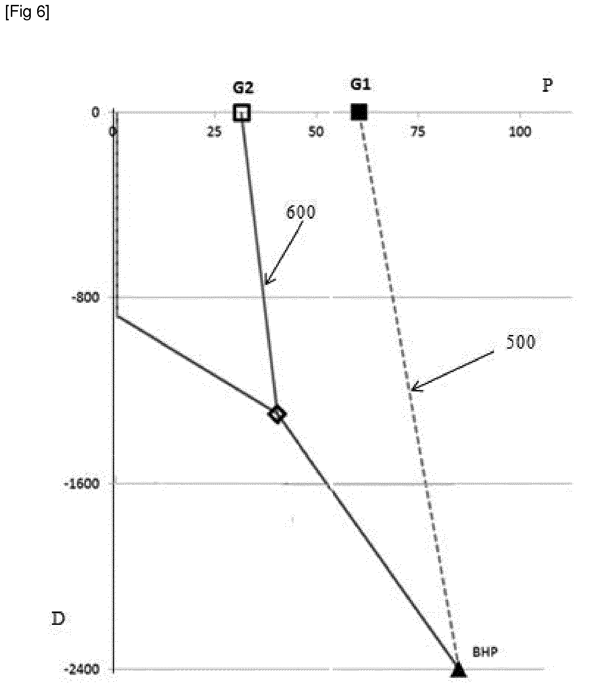

La [Fig 6] illustre les résultats des évolutions de pressions de cette étude comparative. Le graphique de la [Fig 6] illustre les évolutions de pressions P, en abscisse, en fonction de la profondeur D considérée sur le puits, en ordonnée. La courbe 500 en pointillé représente l'évolution de la pression de gaz selon le procédé de l'art antérieur. La courbe 600 représente l'évolution de la pression de gaz selon le procédé de l'invention.

La pression en gaz requise en fond de puits BHP est de 85 bar au débit nominal d'injection.

Selon le procédé selon l'art antérieur, la pression de gaz nécessaire en tête de puits pour la réinjection de gaz directe G1 est de 60.5 bar (courbe 500 sur la [Fig 6]). Cette configuration du puits consomme de l'énergie pour la compression du gaz en surface et nécessite des moyens de compression onéreux et volumineux.

Selon le procédé selon l'invention, une zone de mélange gaz liquide est forcée dans le cylindre interne sur 1100 m avec une recompression hydrostatique sécurisée car les conditions de vitesse sont favorables à l'entrainement du gaz par la phase liquide (vitesses superficielles gaz et liquides supérieures à 1 m/s). La pression de gaz nécessaire en tête de puits G2 est alors réduite à 31.5 bar (courbe 600 de la [Fig 6]).

Le procédé selon l'invention permet donc de réduire notablement la pression requise en tête de puits, tout en sécurisant la zone de recompression hydrostatique dans le cylindre interne. Les longueurs de cylindre interne, la position des points d'injection et leur nombre peuvent être optimisés en fonction des caractéristiques du site de réinjection et des débits de réinjection souhaités.

## Revendications

1. Procédé d'injection d'un gaz dans une formation souterraine au moyen d'un puits, le puits comprenant deux cylindres coaxiaux (10, 20) délimitant un volume central et un volume annulaire, le puits comprenant une tête de puits (60), ladite tête de puits (60) comprenant une entrée de liquide et une entrée de gaz, ledit puits comprenant une sortie de mélange gaz/liquide, ledit gaz circulant de ladite entrée de gaz vers ladite sortie de mélange liquide/gaz, ledit liquide circulant de ladite entrée de liquide vers ladite sortie de mélange liquide/gaz, ledit procédé comprenant les étapes suivantes :
a) On injecte ledit liquide (IL) depuis ladite entrée de liquide et ledit gaz depuis ladite entrée de gaz séparément, l'un dans ledit volume central et l'autre dans ledit volume annulaire,
b) On mélange ledit liquide et ledit gaz en faisant traverser ledit cylindre central radialement par l'un de ces deux fluides en ouvrant ou fermant au moins un point d'injection parmi au moins deux points d'injection, lesdits au moins deux points d'injection étant répartis le long dudit cylindre central (20), ledit cylindre central (20) s'étendant sensiblement sur toute la longueur dudit puits et,
c) On fait ressortir un mélange liquide/gaz ainsi obtenu au niveau de ladite sortie de mélange gaz/liquide pour le transférer dans ladite formation souterraine.

2. Procédé d'injection de gaz dans une formation souterraine selon la revendication 1, pour lequel, lors de l'étape b), les ouvertures ou fermetures desdits au moins deux points d'injection suivent une séquence d'ouvertures/fermetures.

3. Procédé d'injection de gaz dans une formation souterraine selon la revendication 1, pour lequel ladite séquence d'ouvertures/fermetures comporte l'ouverture d'un point d'injection lorsque la pression du fluide traversant ledit cylindre central est supérieure à la pression de l'autre fluide, au niveau dudit point d'injection, et lorsque la pression dudit liquide est supérieure à un seuil de pression prédéterminé, au niveau dudit point d'injection.

4. Procédé d'injection de gaz dans une formation souterraine selon la revendication 3, pour lequel ledit seuil de pression prédéterminé (PV1, PV2) est différent pour chacun des points d'injection.

5. Procédé d'injection de gaz dans une formation souterraine selon l'une des revendications précédentes, pour lequel :
a) On injecte séparément ledit liquide dans ledit volume central et ledit gaz dans ledit volume annulaire,
b) On mélange ledit liquide et ledit gaz en faisant traverser radialement ledit cylindre central par ledit gaz dudit volume annulaire vers ledit volume central par l'ouverture d'au moins un point d'injection parmi au moins deux points d'injection répartis le long dudit cylindre central (20),
c) On fait ressortir ledit mélange liquide/gaz ainsi obtenu au niveau de ladite sortie de mélange gaz/liquide, ladite sortie de mélange liquide/gaz étant située au pied dudit volume central.

6. Procédé d'injection de gaz dans une formation souterraine selon l'une des revendications 1 à 4, pour lequel :
a) On injecte séparément ledit liquide dans ledit volume central et ledit gaz dans ledit volume annulaire,
b) On mélange ledit liquide et ledit gaz en faisant traverser radialement ledit cylindre central par ledit liquide dudit volume central vers ledit volume annulaire par l'ouverture d'au moins un point d'injection parmi au moins deux points d'injection répartis le long dudit cylindre central (20),
c) On fait ressortir ledit mélange liquide/gaz ainsi obtenu au niveau de ladite sortie de mélange gaz/liquide, ladite sortie de mélange liquide/gaz étant située au pied dudit volume annulaire

7. Procédé d'injection de gaz dans une formation souterraine selon l'une des revendications 1 à 4, pour lequel :
a) On injecte séparément ledit liquide dans ledit volume annulaire et ledit gaz dans ledit volume central,
b) On mélange ledit liquide et ledit gaz en faisant traverser radialement ledit cylindre central par ledit liquide dudit volume annulaire vers ledit volume central par l'ouverture d'au moins un point d'injection parmi au moins deux points d'injection répartis le long dudit cylindre central (20)
c) On fait ressortir ledit mélange liquide/gaz ainsi obtenu au niveau de ladite sortie de mélange gaz/liquide, ladite sortie de mélange liquide/gaz étant située au pied dudit volume central.

8. Procédé d'injection de gaz dans une formation souterraine selon l'une des revendications 1 à 4, pour lequel :
a) On injecte séparément ledit liquide dans ledit volume annulaire et ledit gaz dans ledit volume central,
b) On mélange ledit liquide et ledit gaz en faisant traverser radialement ledit cylindre central par ledit gaz dudit volume central vers ledit volume annulaire par l'ouverture d'au moins un point d'injection parmi au moins deux points d'injection répartis le long dudit cylindre central (20),
c) On fait ressortir ledit mélange liquide/gaz ainsi obtenu au niveau de ladite sortie de mélange gaz/liquide, ladite sortie de mélange liquide/gaz étant située au pied dudit volume annulaire.

9. Procédé d'injection de gaz dans une formation souterraine selon l'une des revendications précédentes, pour lequel on mélange le liquide et le gaz par lesdits au moins deux points d'injection régulièrement répartis sur ledit cylindre central, le long du puits.

10. Procédé d'injection de gaz dans une formation souterraine selon l'une des revendications 3 à 9, dans lequel la séquence d'ouvertures/fermetures comprend les ouvertures successives des points d'injections en partant du point d'injection le plus bas du puits vers le point d'injection le plus haut du puits.

11. Procédé d'injection de gaz dans une formation souterraine selon la revendication 10, dans lequel, la séquence d'ouvertures/fermetures comprend les fermetures successives des points d'injections en partant du point d'injection le plus bas du puits vers le point d'injection le plus haut du puits.

12. Procédé d'injection de gaz dans une formation souterraine selon l'une des revendications précédentes, pour lequel lors de l'étape dudit mélange dudit liquide et dudit gaz, on augmente progressivement le débit d'injection (AIG1, AIG2) dudit fluide traversant radialement ledit cylindre central (20).

13. Procédé d'injection de gaz dans une formation souterraine selon l'une des revendications 1 à 12, pour lequel lors de l'étape dudit mélange dudit liquide et dudit gaz, on contrôle la pression d'injection dudit fluide traversant radialement ledit cylindre central (20).

14. Procédé d'injection de gaz dans une formation souterraine selon l'une des revendications précédentes, pour lequel les vitesses superficielles de déplacement des fluides sont supérieures à 1m/s.

15. Système d'injection de gaz dans une formation souterraine pour la mise en œuvre du procédé selon l'une des revendications précédentes, comprenant un puits, ledit puits comprenant deux cylindres coaxiaux (10, 20) délimitant un volume central et un volume annulaire, le cylindre central (20) s'étendant sensiblement sur toute la longueur dudit puits, ledit puits comprenant une tête de puits (60), ladite tête de puits (60) comprenant une entrée de gaz et une entrée de liquide, ledit puits comprenant une sortie de mélange gaz/liquide, ledit système comprenant un moyen de circulation dudit gaz de ladite entrée de gaz vers ladite sortie de mélange liquide/gaz, ledit système (100) comprenant un deuxième moyen de circulation dudit liquide de ladite entrée de liquide vers ladite sortie de mélange liquide/gaz, ledit système comportant un moyen d'injection de liquide dans ladite tête de puits pour injecter ledit liquide dans un des deux volumes et un moyen d'injection de gaz, dans la tête de puits pour injecter ledit gaz dans l'autre volume ledit système (100) comportant
au moins deux moyens de passage radial (30, 35) pour permettre à l'un des fluides de traverser le cylindre central et de l'injecter dans l'autre fluide, lesdits au moins deux moyens de passage radial (30, 35) étant régulièrement répartis le long dudit puits, ledit système (100) étant **caractérisé en ce que** chaque moyen de passage radial (30, 35) comprend au moins une valve (90) et un clapet de non-retour (70), ladite valve (90) comprenant un système d'ouverture de la valve lorsque la pression dudit liquide, au niveau de ladite valve, dépasse un seuil de pression prédéfini (PV1, PV2), ledit clapet de non-retour (90) comportant un moyen d'ouverture de clapet lorsque la pression du fluide traversant ledit cylindre central dépasse la pression de l'autre fluide, au niveau dudit clapet de non-retour (90).

16. Système selon l'une des revendications 15, pour lequel ledit système comporte un moyen d'obturation (40) au pied du volume où aucun mélange liquide/gaz ne se forme, de préférence ledit moyen d'obturation (40) est un élément annulaire lorsque le volume où se forme ledit mélange liquide/gaz est ledit volume central ou ledit moyen d'obturation (40) est un élément cylindrique lorsque le volume où se forme ledit mélange liquide/gaz est ledit volume annulaire.

17. Système selon la revendication 15 ou 16, pour lequel ledit système comporte un moyen de restriction, ledit moyen de restriction étant positionné au-dessus dudit moyen de passage radial (30, 35), dans le volume où se forme ledit mélange liquide/gaz.

18. Système selon l'une des revendications 15 à 17, pour lequel ladite valve (70) est tarée par une charge en gaz égal audit seuil de pression prédéterminé (PV1, PV2).

19. Utilisation du procédé ou du système selon l'une des revendications précédentes pour une application de géothermie ou de stockage de CO₂.

## Patentansprüche

1. Verfahren zur Injektion eines Gases in eine unterirdische Formation mittels eines Bohrlochs, wobei das Bohrloch zwei koaxiale Zylinder (10, 20) umfasst, die ein zentrales Volumen und ein ringförmiges Volumen begrenzen, wobei das Bohrloch einen Bohrlochkopf (60) umfasst, wobei der Bohrlochkopf (60) einen Flüssigkeitseinlass und einen Gaseinlass umfasst, wobei das Bohrloch einen Gas-Flüssigkeits-Gemisch-Auslass umfasst, wobei das Gas vom Gaseinlass zu diesem Flüssigkeits-Gas-Gemisch-Auslass strömt, wobei die Flüssigkeit vom Flüssigkeitseinlass zum Flüssigkeits-Gas-Gemisch-Auslass strömt, wobei das Verfahren die folgenden Schritte umfasst:
a) Die Flüssigkeit wird vom Flüssigkeitseinlass aus injiziert (IL) und das Gas separat vom Gaseinlass aus, das eine in das zentrale Volumen und das andere in das ringförmige Volumen,
b) die Flüssigkeit und das Gas werden gemischt, indem der zentrale Zylinder radial von einem dieser zwei Fluide durchqueren gelassen wird, indem mindestens ein Injektionspunkt von mindestens zwei Injektionspunkten geöffnet oder geschlossen wird, wobei die mindestens zwei Injektionspunkte entlang des zentralen Zylinders (20) verteilt sind, wobei sich der zentrale Zylinder (20) im Wesentlichen über die gesamte Länge des Bohrlochs erstreckt, und
c) ein so erhaltenes Flüssigkeits-Gas-Gemisch wird an dem Gas-Flüssigkeits-Gemisch-Auslass ausgeleitet, um es in die unterirdische Formation einzuleiten.

2. Verfahren zur Gasinjektion in eine unterirdische Formation nach Anspruch 1, wobei in Schritt b) die Öffnungen oder Schließungen der mindestens zwei Injektionspunkte gemäß einer Folge von Öffnungen/Schließungen erfolgen.

3. Verfahren zur Gasinjektion in eine unterirdische Formation nach Anspruch 1, wobei die Folge von Öffnungen/Schließungen das Öffnen eines Injektionspunktes umfasst, wenn der Druck des den zentralen Zylinder durchquerenden Fluids höher als der Druck des anderen Fluids an dem Injektionspunkt ist und wenn der Druck der Flüssigkeit höher als ein vorbestimmter Druckschwellenwert an dem Injektionspunkt ist.

4. Verfahren zur Gasinjektion in eine unterirdische Formation nach Anspruch 3, wobei der vorbestimmte Druckschwellenwert (PV1, PV2) für jeden der Injektionspunkte ein anderer ist.

5. Verfahren zur Gasinjektion in eine unterirdische Formation nach einem der vorhergehenden Ansprüche, wobei:
a) die Flüssigkeit in das zentrale Volumen und das Gas in das ringförmige Volumen separat injiziert werden,
b) die Flüssigkeit und das Gas gemischt werden, indem der zentrale Zylinder durch das Öffnen mindestens eines Injektionspunktes von mindestens zwei Injektionspunkten, die entlang des zentralen Zylinders (20) verteilt sind, radial von dem Gas des ringförmigen Volumens zum zentralen Volumen durchqueren gelassen wird,
c) das so erhaltene Flüssigkeits-Gas-Gemisch an dem Gas-Flüssigkeits-Gemisch-Auslass ausgeleitet wird, wobei sich dieser Flüssigkeits-Gas-Gemisch-Auslass am Fuß des zentralen Volumens befindet.

6. Verfahren zur Gasinjektion in eine unterirdische Formation nach einem der Ansprüche 1 bis 4, wobei:
a) die Flüssigkeit in das zentrale Volumen und das Gas in das ringförmige Volumen separat injiziert werden,
b) die Flüssigkeit und das Gas gemischt werden, indem der zentrale Zylinder durch das Öffnen mindestens eines Injektionspunktes von mindestens zwei Injektionspunkten, die entlang des zentralen Zylinders (20) verteilt sind, radial von der Flüssigkeit des zentralen Volumens zum ringförmigen Volumen durchqueren gelassen wird,
c) das so erhaltene Flüssigkeits-Gas-Gemisch an dem Gas-Flüssigkeits-Gemisch-Auslass ausgeleitet wird, wobei sich dieser Flüssigkeits-Gas-Gemisch-Auslass am Fuß des ringförmigen Volumens befindet.

7. Verfahren zur Gasinjektion in eine unterirdische Formation nach einem der Ansprüche 1 bis 4, wobei:
a) die Flüssigkeit in das ringförmige Volumen und das Gas in das zentrale Volumen separat injiziert werden,
b) die Flüssigkeit und das Gas gemischt werden, indem der zentrale Zylinder durch das Öffnen mindestens eines Injektionspunktes von mindestens zwei Injektionspunkten, die entlang des zentralen Zylinders (20) verteilt sind, radial von der Flüssigkeit des ringförmigen Volumens zum zentralen Volumen durchqueren gelassen wird,
c) das so erhaltene Flüssigkeits-Gas-Gemisch an dem Gas-Flüssigkeits-Gemisch-Auslass ausgeleitet wird, wobei sich dieser Flüssigkeits-Gas-Gemisch-Auslass am Fuß des zentralen Volumens befindet.

8. Verfahren zur Gasinjektion in eine unterirdische Formation nach einem der Ansprüche 1 bis 4, wobei:
a) die Flüssigkeit in das ringförmige Volumen und das Gas in das zentrale Volumen separat injiziert werden,
b) die Flüssigkeit und das Gas gemischt werden, indem der zentrale Zylinder durch das Öffnen mindestens eines Injektionspunktes von mindestens zwei Injektionspunkten, die entlang des zentralen Zylinders (20) verteilt sind, radial von dem Gas des zentralen Volumens zum ringförmigen Volumen durchqueren gelassen wird,
c) das so erhaltene Flüssigkeits-Gas-Gemisch an dem Gas-Flüssigkeits-Gemisch-Auslass ausgeleitet wird, wobei dieser Flüssigkeits-Gas-Gemisch-Auslass sich am Fuß des ringförmigen Volumens befindet.

9. Verfahren zur Gasinjektion in eine unterirdische Formation nach einem der vorhergehenden Ansprüche, wobei die Flüssigkeit und das Gas durch die mindestens zwei Injektionspunkte gemischt werden, die auf dem zentralen Zylinder entlang des Bohrlochs gleichmäßig verteilt sind.

10. Verfahren zur Gasinjektion in eine unterirdische Formation nach einem der Ansprüche 3 bis 9, wobei die Folge von Öffnungen/Schließungen die aufeinander folgenden Öffnungen der Injektionspunkte ausgehend vom tiefsten Injektionspunkt des Bohrlochs zum höchsten Injektionspunkt des Bohrlochs hin umfasst.

11. Verfahren zur Gasinjektion in eine unterirdische Formation nach Anspruch 10, wobei die Folge von Öffnungen/Schließungen die aufeinander folgenden Schließungen der Injektionspunkte ausgehend vom tiefsten Injektionspunkt des Bohrlochs zum höchsten Injektionspunkt des Bohrlochs hin umfasst.

12. Verfahren zur Gasinjektion in eine unterirdische Formation nach einem der vorhergehenden Ansprüche, wobei im Schritt des Mischens der Flüssigkeit und des Gases die Injektionsdurchflussmenge (AIG1, AIG2) des Fluids, das den zentralen Zylinder (20) radial durchquert, allmählich erhöht wird.

13. Verfahren zur Gasinjektion in eine unterirdische Formation nach einem der Ansprüche 1 bis 12, wobei im Schritt des Mischens der Flüssigkeit und des Gases der Injektionsdruck des Fluids, das den zentralen Zylinder (20) radial durchquert, gesteuert wird.

14. Verfahren zur Gasinjektion in eine unterirdische Formation nach einem der vorhergehenden Ansprüche, wobei die Oberflächengeschwindigkeiten der Bewegung der Fluide größer als 1 m/s sind.

15. System zur Gasinjektion in eine unterirdische Formation für die Durchführung des Verfahrens nach einem der vorhergehenden Ansprüche, welches ein Bohrloch umfasst, wobei das Bohrloch zwei koaxiale Zylinder (10, 20) umfasst, die ein zentrales Volumen und ein ringförmiges Volumen begrenzen, wobei sich der zentrale Zylinder (20) im Wesentlichen über die gesamte Länge des Bohrlochs erstreckt, wobei das Bohrloch einen Bohrlochkopf (60) umfasst, wobei der Bohrlochkopf (60) einen Gaseinlass und einen Flüssigkeitseinlass umfasst, wobei das Bohrloch einen Gas-Flüssigkeits-Gemisch-Auslass umfasst, wobei das System ein Mittel zum Strömenlassen des vom Gaseinlass zu diesem Flüssigkeits-Gas-Gemisch-Auslass umfasst, wobei das System (100) ein zweites Mittel zum Strömenlassen der Flüssigkeit vom Flüssigkeitseinlass zum Flüssigkeits-Gas-Gemisch-Auslass umfasst, wobei das System ein Mittel zur Injektion von Flüssigkeit in den Bohrlochkopf, um die Flüssigkeit in eines der zwei Volumina zu injizieren, und ein Mittel zur Injektion von Gas in den Bohrlochkopf, um das Gas in das andere Volumen zu injizieren, aufweist, wobei das System (100) mindestens zwei Radialdurchgangsmittel (30, 35) aufweist, um einem der Fluide zu ermöglichen, den zentralen Zylinder zu durchqueren, und es in das andere Fluid zu injizieren, wobei die mindestens zwei Radialdurchgangsmittel (30, 35) gleichmäßig entlang des Bohrlochs verteilt sind, wobei das System (100) **dadurch gekennzeichnet ist, dass** jedes Radialdurchgangsmittel (30, 35) mindestens ein Ventil (90) und ein Rückschlagventil (70) umfasst, wobei das Ventil (90) ein System zum Öffnen des Ventils, wenn der Druck der Flüssigkeit an dem Ventil einen vordefinierten Druckschwellenwert (PV1, PV2) überschreitet, umfasst, wobei das Rückschlagventil (90) ein Mittel zum Öffnen des Rückschlagventils, wenn der Druck des den zentralen Zylinder durchquerenden Fluids den Druck des anderen Fluids an dem Rückschlagventil (90) überschreitet, aufweist.

16. System nach Anspruch 15, wobei das System ein Verschlussmittel (40) am Fuß des Volumens aufweist, wo sich kein Flüssigkeits-Gas-Gemisch bildet, wobei vorzugsweise das Verschlussmittel (40) ein ringförmiges Element ist, wenn das Volumen, wo sich das Flüssigkeits-Gas-Gemisch bildet, das zentrale Volumen ist, oder das Verschlussmittel (40) ein zylindrisches Element ist, wenn das Volumen, wo sich das Flüssigkeits-Gas-Gemisch bildet, das ringförmige Volumen ist.

17. System nach Anspruch 15 oder 16, wobei das System ein Begrenzungsmittel aufweist, wobei das Begrenzungsmittel oberhalb des Radialdurchgangsmittels (30, 35) in dem Volumen positioniert ist, wo sich das Flüssigkeits-Gas-Gemisch bildet.

18. System nach einem der Ansprüche 15 bis 17, wobei das Ventil (70) für eine Belastung mit Gas geeicht ist, die gleich dem vorbestimmten Druckschwellenwert (PV1, PV2) ist.

19. Nutzung des Verfahrens oder des Systems nach einem der vorhergehenden Ansprüche für eine Geothermieanwendung oder Anwendung bei der CO₂-Speicherung.

## Claims

1. Method for injecting a gas into a subterranean formation by means of a well, the well comprising two coaxial cylinders (10, 20) delimiting a central volume and an annular volume, the well comprising a wellhead (60), said wellhead (60) comprising a liquid inlet and a gas inlet, said well comprising a gas/liquid mixture outlet, said gas circulating from said gas inlet to said liquid/gas mixture outlet, said liquid circulating from said liquid inlet to said liquid/gas mixture outlet, said method comprising the following steps:
a) injecting said liquid (IL) from said liquid inlet and said gas from said gas inlet separately, one into said central volume and the other into said annular volume,
b) mixing said liquid and said gas by causing one of these two fluids to pass through said central cylinder radially by opening or closing at least one injection point among at least two injection points, said at least two injection points being distributed along said central cylinder (20), said central cylinder (20) extending substantially along the entire length of said well, and,
c) causing a liquid/gas mixture thus obtained to emerge at said gas/liquid mixture outlet to transfer it to said subterranean formation.

2. Method for injecting gas into a subterranean formation according to Claim 1, wherein, in step b), the openings or closures of said at least two injection points follow a sequence of openings/closures.

3. Method for injecting gas into a subterranean formation according to Claim 1, wherein said sequence of openings/closures involves the opening of an injection point when the pressure of the fluid passing through said central cylinder is higher than the pressure of the other fluid, at said injection point, and when the pressure of said liquid is higher than a predetermined pressure threshold, at said injection point.

4. Method for injecting gas into a subterranean formation according to Claim 3, wherein said predetermined pressure threshold (PV1, PV2) is different for each of the injection points.

5. Method for injecting gas into a subterranean formation according to one of the preceding claims, wherein:
a) said liquid is injected into said central volume and said gas into said annular volume, separately,
b) said liquid and said gas are mixed by causing said gas to pass radially through said central cylinder from said annular volume to said central volume by opening at least one injection point among at least two injection points distributed along said central cylinder (20),
c) said liquid/gas mixture thus obtained is caused to emerge at said gas/liquid mixture outlet, said liquid/gas mixture outlet being situated at the foot of said central volume.

6. Method for injecting gas into a subterranean formation according to one of Claims 1 to 4, wherein:
a) said liquid is injected into said central volume and said gas into said annular volume, separately,
b) said liquid and said gas are mixed by causing said liquid to pass radially through said central cylinder from said central volume to said annular volume by opening at least one injection point among at least two injection points distributed along said central cylinder (20),
c) said liquid/gas mixture thus obtained is caused to emerge at said gas/liquid mixture outlet, said liquid/gas mixture outlet being situated at the foot of said annular volume.

7. Method for injecting gas into a subterranean formation according to one of Claims 1 to 4, wherein:
a) said liquid is injected into said annular volume and said gas into said central volume, separately,
b) said liquid and said gas are mixed by causing said liquid to pass radially through said central cylinder from said annular volume to said central volume by opening at least one injection point among at least two injection points distributed along said central cylinder (20),
c) said liquid/gas mixture thus obtained is caused to emerge at said gas/liquid mixture outlet, said liquid/gas mixture outlet being situated at the foot of said central volume.

8. Method for injecting gas into a subterranean formation according to one of Claims 1 to 4, wherein:
a) said liquid is injected into said annular volume and said gas into said central volume, separately,
b) said liquid and said gas are mixed by causing said gas to pass radially through said central cylinder from said central volume to said annular volume by opening at least one injection point among at least two injection points distributed along said central cylinder (20),
c) said liquid/gas mixture thus obtained is caused to emerge at said gas/liquid mixture outlet, said liquid/gas mixture outlet being situated at the foot of said annular volume.

9. Method for injecting gas into a subterranean formation according to one of the preceding claims, wherein the liquid and the gas are mixed through said at least two injection points that are regularly distributed on said central cylinder, along the well.

10. Method for injecting gas into a subterranean formation according to one of Claims 3 to 9, wherein the sequence of openings/closures comprises the successive openings of the injection points starting from the lowest injection point of the well to the highest injection point of the well.

11. Method for injecting gas into a subterranean formation according to Claim 10, wherein the sequence of openings/closures comprises the successive closures of the injection points starting from the lowest injection point of the well to the highest injection point of the well.

12. Method for injecting gas into a subterranean formation according to one of the preceding claims, wherein, during the step of said mixing of said liquid and said gas, the injection flow rate (AIG1, AIG2) of said fluid passing radially through said central cylinder (20) is progressively increased.

13. Method for injecting gas into a subterranean formation according to one of Claims 1 to 12, wherein, during the step of said mixing of said liquid and said gas, the injection pressure of said fluid passing radially through said central cylinder (20) is controlled.

14. Method for injecting gas into a subterranean formation according to one of the preceding claims, wherein the superficial displacement velocities of the fluids are greater than 1 m/s.

15. System for injecting gas into a subterranean formation for implementing the method according to one of the preceding claims, comprising a well, said well comprising two coaxial cylinders (10, 20) delimiting a central volume and an annular volume, the central cylinder (20) extending substantially along the entire length of said well, said well comprising a wellhead (60), said wellhead (60) comprising a gas inlet and a liquid inlet, said well comprising a gas/liquid mixture outlet, said system comprising a means for circulating said gas from said gas inlet to said liquid/gas mixture outlet, said system (100) comprising a second means for circulating said liquid from said liquid inlet to said liquid/gas mixture outlet, said system having a means for injecting liquid into said wellhead, to inject said liquid into one of the two volumes, and a means for injecting gas into the wellhead, to inject said gas into the other volume, said system (100) having at least two radial passage means (30, 35) to allow one of the fluids to pass through the central cylinder and to inject it into the other fluid, said at least two radial passage means (30, 35) being regularly distributed along said well, said system (100) being **characterized in that** each radial passage means (30, 35) comprises at least one valve (90) and one non-return check valve (70), said valve (90) comprising a system for opening the valve when the pressure of said liquid, at said valve, exceeds a predefined pressure threshold (PV1, PV2), said non-return check valve (90) having a means for opening the check valve when the pressure of the fluid passing through said central cylinder exceeds the pressure of the other fluid, at said non-return check valve (90).

16. System according to one of Claims 15, wherein said system has a shut-off means (40) at the foot of the volume where no liquid/gas mixture forms, preferably said shut-off means (40) is an annular element when the volume where said liquid/gas mixture forms is said central volume, or said shut-off means (40) is a cylindrical element when the volume where said liquid/gas mixture forms is said annular volume.

17. System according to Claim 15 or 16, wherein said system has a restriction means, said restriction means being positioned above said radial passage means (30, 35), in the volume where said liquid/gas mixture forms.

18. System according to one of Claims 15 to 17, wherein said valve (70) is calibrated by a gas load equal to said predetermined pressure threshold (PV1, PV2).

19. Use of the method or system according to one of the preceding claims for a geothermal or CO₂ storage application.
